Europäisches Patentamt

European Patent Office

Office européen des brevets

(19)

(11) Veröffentlichungsnummer: **0 292 859 B1**

# (12) EUROPÄISCHE PATENTSCHRIFT

(45) Veröffentlichungstag der Patentschrift: **08.01.92**

(51) Int. Cl.5: **A01B 63/111**

(21) Anmeldenummer: **88107987.5**

(22) Anmeldetag: **19.05.88**

(54) **Verfahren und Einrichtung zur Steuerung der Position einer Anhängevorrichtung.**

(30) Priorität: **27.05.87 US 54658**

(43) Veröffentlichungstag der Anmeldung:
**30.11.88 Patentblatt 88/48**

(45) Bekanntmachung des Hinweises auf die
Patenterteilung:
**08.01.92 Patentblatt 92/02**

(84) Benannte Vertragsstaaten:
**AT BE CH DE ES FR GB IT LI NL SE**

(56) Entgegenhaltungen:
EP-A- 0 043 725      EP-A- 0 102 766
EP-A- 0 112 642      EP-A- 0 153 102
DE-A- 3 240 278      DE-A- 3 316 305
GB-A- 2 093 676      US-A- 4 518 044

(73) Patentinhaber: **DEERE & COMPANY**
**1 John Deere Road**
**Moline, Illinois 61265(US)**

(72) Erfinder: **Boe, Thomas Eugene**
**RFD No. 4**
**Cedar Falls Iowa 50613(US)**
Erfinder: **Sweet, Richard Langel**
**8509 Hammond Avenue**
**Waterloo Iowa 50702(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

## Beschreibung

Die Erfindung betrifft ein Verfahren und eine Einrichtung zur Steuerung der Position einer Anhängevorrichtung eines Fahrzeuges, an die ein bodenbearbeitendes Anbaugerät befestigbar ist. Das Steuersystem erfaßt eine Führungsgröße, einen Lagemeßwert und gegebenenfalls ein Grenzwertsignal. Die Führungsgröße entspricht einer gewünschten Steuercharakteristik der Anhängevorrichtung und ist durch eine Bedienungseinrichtung einstellbar. Der Lagemeßwert gibt die tatsächliche Position der Anhängevorrichtung wieder und wird durch einen Lagesensor erfaßt. Das Grenzwertsignal entspricht einer gewünschten Grenzwertposition der Anhängevorrichtung und wird durch einen manuell einstellbaren Grenzwertsetzer erzeugt. Das Steuersystem erzeugt in Abhängigkeit der Führungsgröße und des Lagemeßwertes automatisch Steuersignale, entsprechend derer die Anhängevorrichtung innerhalb eines Lagebereiches angehoben bzw. abgesenkt wird. Das Steuersystem umfaßt eine Einrichtung, welche unbeabsichtigte Bewegungen beim Anfahren des Steuersystems verhindert. Ein derartiges Steuersystem ist aus der europäischen Patentanmeldung EP-A-0 153 102 bekannt.

Zur Einstellung der Arbeitstiefe eines an einen Traktor befestigten Arbeitsgerätes finden Steuersysteme Verwendung, die anhand verschiedener gemessener und von einer Bedienungsperson vorgegebener Parameter die Arbeitstiefe des Arbeitsgerätes steuern. Die vorliegende Erfindung betrifft insbesondere den Einschaltvorgang eines solchen Steuersystems.

Auch dann, wenn ein elektrohydraulisches Steuersystem für eine Anhängevorrichtung abgeschaltet ist, können die Bedienungselemente manuell verstellt werden. Dabei wird jedoch keine entsprechende Bewegung der Anhängevorrichtung durch das Steuersystem ausgelöst. Eine derartige Verstellung kann zu einer unerwarteten Bewegung der Anhängevorrichtung führen, sobald das System wieder eingeschaltet wird.

In der europäischen Patentanmeldung EP-A-0 153 102 ist ein Steuersystem für eine Anhängevorrichtung beschrieben. Dieses System beinhaltet ein Einschaltverhalten, bei dem die unbeabsichtigte Bewegung der Anhängevorrichtung nach dem Einschalten des Steuersystems so lange verhindert wird, bis die Bedienungselemente auf eine Position eingestellt werden, die der tatsächlichen Lage der Anhängevorrichtung entspricht. Ein anderes Steuersystem für Anhängevorrichtungen ist in der US-PS-4,518,044 beschrieben. Dieses System steuert die Anhängevorrichtung des Traktors in Abhängigkeit gemessener und vorgegebener Zugkräfte, gemessener und vorgegebener Positionen der Anhängevorrichtung, gemessener Motorgeschwindigkeiten und gemessener Radgleitungen. Auch für ein derartiges System wäre es wünschenswert, eine Einschaltverriegelung vorzusehen, die eine beabsichtigte Bewegung der Anhängevorrichtung während des Einschaltvorganges des Steuersystems verhindert, sofern nicht bestimmte Bedingungen erfüllt sind.

Aufgabe der Erfindung ist es, ein Steuersystem gemäß der europäischen Patentanmeldung EP-A-0 153 102 weiterzuentwickeln.

Diese Aufgabe wird gemäß der Erfindung dadurch gelöst, daß ein Anhängevorrichtungs-Steuersystem, das auf einem Mikroprozessor basieren kann, einen Einschaltverriegelungalgorithmus enthält, der unerwünschte und/oder unerwartete Zugbewegungen unmittelbar nach dem Einschalten des Steuersystems verhindert.

Insbesondere wird ein Verfahren vorgeschlagen, das für den Fall, daß beim Anfahren des Steuersystems die tatsächliche Lage der Anhängevorrichtung außerhalb der Grenzposition liegt, das Steuersystem Bewegungen der Anhängevorrichtung so lange unterbindet, bis infolge einer manuellen Verstellung der Bedienungseinrichtung die dieser Verstellung entsprechende Lage der Anhängevorrichtung die Grenzwertposition erreicht hat, und/oder bis infolge einer manuellen Verstellung des Grenzwertsetzers das Grenzwertsignal der tatsächlichen Lage der Anhängevorrichtung entspricht.

Das Verfahren kann auch dahingehend ergänzt bzw. abgewandelt werden, daß beim Anfahren des Steuersystems dieses die Position der Bedienungseinrichtung mit deren Grenzposition vergleicht und eine Bewegung der Anhängevorrichtung so lange unterbindet, wie die Position der Bedienungseinrichtung von der Grenzposition abweicht.

Eine vorteilhafte Weiterbildung dieses Verfahrens ist darin zu sehen, daß dann, wenn die Bedienungseinrichtung von einer mittleren Stellung aus auf die Grenzposition bewegt wurde, das Steuersystem die Anhängevorrichtung derart beeinflußt, daß diese zu einer Position bewegt wird, die der Grenzposition der Bedienungseinrichtung entspricht.

Die Aufgabe wird erfindungsgemäß auch durch ein Steuersystem der eingangs genannten Art gelöst, das dadurch gekennzeichnet ist, daß die Anfahrverriegelungseinrichtung eine Vergleichseinrichtung zur Feststellung, ob die tatsächliche Lage der Anhängevorrichtung außerhalb der Grenzposition liegt, aufweist und einen Diskriminator enthält, welcher solange die Abgabe eines solchen Steuersignals, das die aktuelle Lage der Anhängevorrichtung aufrechterhält und eine Bewegung der Anhängevorrichtung verhindert, veranlaßt, bis die Führungsgröße in Folge einer manuellen Verstellung der Bedienungseinrichtung eine der Grenzpositionen entsprechende Größe erreicht und/oder bis das Grenzwertsignal in Folge einer manuellen Verstellung des Grenzwertsetzers eine der Lage der Anhängevorrichtung entsprechende Größe erreicht.

Eine vorteilhafte Abwandlung bzw. Weiterbildung dieses Steuersystems ist darin zu sehen, daß die Anfahrverriegelungseinrichtung eine Vergleichseinrichtung zur Verstellung der relativen Lage der Bedienungseinrichtung zu der Grenzposition aufweist und einen Diskriminator enthält, welcher solange die Abgabe eines Steuersignals, durch welches die aktuelle Lage der Anhängevorrichtung aufrechterhalten und eine Bewegung der Anhängevorrichtung verhindert wird, veranlaßt, wie die Lage der Bedienungseinrichtung von der Grenzposition abweicht.

Dieses Steuersystem läßt sich in vorteilhafter Weise dadurch weiter ausbilden, daß die Anfahrverriegelungseinrichtung eine Abfrageeinrichtung enthält, welche prüft, ob die Bedienungseinrichtung von einer mittleren Lage aus auf die Grenzposition bewegt wurde, und nur falls dies zutrifft, die Abgabe von Steuersignalen veranlaßt, die die Anhängevorrichtung auf eine Position entsprechend der Grenzposition bewegen.

Durch die Erfindung werden unerwünschte und/oder unerwartete Bewegungen der Anhängevorrichtung während des Einschaltens des Steuersystems der Anhängevorrichtung verhindert. Insbesondere verhindert ein der Erfindung entsprechender Einschaltverriegelungsalgorithmus während des Einschaltens des Steuersystems Bewegungen der Anhängevorrichtung, welche einer Änderung der Lage der Anhängevorrichtung oder einer Änderung der Einstellung des Bedienungshebels entsprechen, die aufgetreten sind, während das Steuersystem nicht in Betrieb war. Dieser Algorithmus verhindert nicht nur Bewegungen aufgrund einer Fehlanpassung zwischen der Position des Bedienungshebels und der Anhängevorrichtung, sondern er minimiert auch die Bewegungen, die durch Ventillecks verursacht werden könnten. Die Entriegelung der Anhängevorrichtung wird dadurch erreicht, daß das Steuersignal für die Anhängevorrichtung so verändert wird, daß es den Wert des Lagemeßwertes der Anhängevorrichtung, der beim Einschalten erreicht war, durchläuft, oder daß der Bedienungshebel zur Einstellung der Lage der Anhängevorrichtung auf eine der beiden Endstellungen bewegt wird, wobei eine Bewegung der Anhängevorrichtung auf die Endstellung zugelassen wird. Wenn der Bedienungshebel beim Einschalten des Steuersystems auf einer der beiden Endstellungen steht, muß der Hebel von der Endlage weg und dann wieder zurück bewegt werden, um eine Bewegung der Anhängevorrichtung herbeizuführen.

Dieser Einschaltverriegelungsalgorithmus verhindert auch eine Bewegung der Anhängevorrichtung, die durch Änderung des oberen Grenzwertes während einer Abschaltphase verursacht werden könnte. Falls sich die Lage der Anhängevorrichtung beim Einschalten über dem oberen Grenzwert befindet, wird eine Beeinflussung der Anhängevorrichtung durch den oberen Grenzwert solange ausgeschlossen, bis die Bedienungsperson die Anhängevorrichtung unter den oberen Grenzwert bewegt oder bis die Bedienungsperson den oberen Grenzwert über den Lagewert der Anhängevorrichtung eingestellt hat. Damit wird verhindert, daß Bewegungen der Anhängevorrichtung beim Einschalten dann auftreten, wenn sich die Lage der Anhängevorrichtung beim Einschalten des Steuersystems außerhalb von Grenzwerten befindet, die durch ein Bedienungsperson eingestellt wurde bzw., wenn während einer Abschaltphase des Steuersystems die manuellen Steuervorgaben geändert wurden.

Das Steuersystem für die Anhängevorrichtung kann auch Schalter beinhalten, die außerhalb der Traktorkabine angebracht sind, so daß eine Bedienungsperson auch von hier aus die Anhängevorrichtung anheben und absenken kann. Der vorliegende Einschaltverriegelungsalgorithmus wird durch die Bedienung solcher Schalter nicht beeinträchtigt.

Weitere zweckmäßige Ausgestaltungen und Vorteile werden anhand eines Ausführungsbeispieles, welches in der Zeichnung dargestellt ist, beschrieben und erläutert. Es zeigt:

Fig. 1      eine einfache Darstellung eines landwirtschaftlichen Schleppers, der mit der vorliegenden Erfindung versehen ist,

Fig. 2a - 2f      ein Flußdiagramm des Algorithmus, der von einer zentralen Steuereinheit ausgeführt wird und

Fig. 3      eine detaillierte Ansicht des Bedienungshebels.

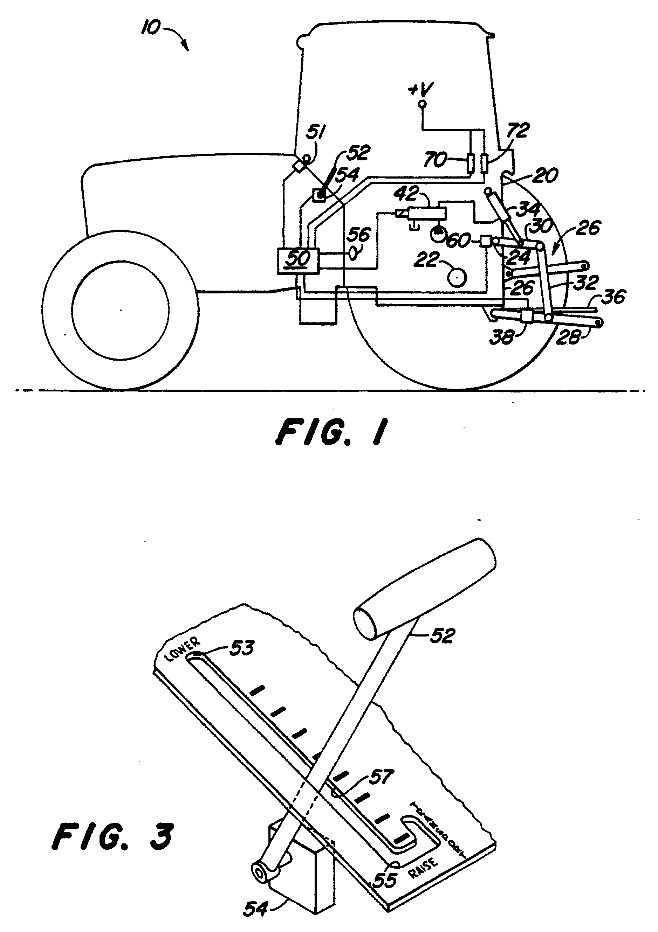

Fig. 1 zeigt einen Schlepper 10, dessen hinterer Rahmen 20 eine Hinterachse 22 und eine Hubwelle 24 trägt. Eine Geräteanhängevorrichtung 26, beispielsweise eine übliche Drei-Punkt-Anhängevorrichtung, enthält Unterlenker 28, die mit Hubarmen 30 über Spindeln 32 verbunden sind. Die Hubarme 30 sind mit der Hubwelle 24 verbunden, um gleichzeitige und gleiche Bewegungen sicherzustellen. Sie werden durch ein paar parallel befestigter Hydraulikantriebe oder Hubwellen-Zylinder 34 gehoben und gesenkt. Eine Zugstange 36 erstreckt sich nach hinten über das Gehäuse 20 hinaus. Der Schlepper 10 und die Anhängevorrichtung 26 sind nur beispielhaft angegeben. Die Erfindung kann auch bei Schleppern und Anhängevorrichtungen anderer Konfiguration Verwendung finden. Die Erfindung kann z.B. auch bei einem Schlepper mit gelenkigem Vier-Radantrieb oder einem vorderradangetriebenen Breitspurschlepper angewandt werden.

Ein anbaufähiges Bodenbearbeitungsgerät (nicht abgebildet), wie z.B. ein Scharpflug oder ein Meißelpflug, können in der üblichen Art an den Unterlenker 28 befestigt werden. Alternativ kann auch ein Schleppgerät (nicht abgebildet) an die Zugstange 36 angeschlossen werden. In die Anhängevorrichtung, z.B. in die Unterlenker 28, können Zugkraftsensoren 38 eingebaut werden, um die Zugkraft zu messen, die auf die Unterlenker 28 von dem angekuppelten Anbaugeräte übertragen werden. Wenn die Anbauvorrichtung 26 mehrere Zugkraftsensoren 38 enthält kann ein einziges die Zugkraft repräsentierendes Zugkraftsignal dadurch gebildet werden, daß die einzelnen Signale der Sensoren 38 vereinigt werden. Im Falle eines Schleppgerätes kann die Zugkraft durch einen Zugkraftsensor, der in der Zugstange 36 oder in einer an die Unterlenker 28 gekoppelten Verbindungsstange zwischengeschaltet ist, gemessen werden. In beiden Fällen kann jeder geeignete bekannte Zugkraftsensor verwendet werden.

Der Hydraulikflüssigkeitsstrom zu und von dem Hubwellen-Zylinder 34 oder zu und von einem entfernt liegenden, nicht dargestellten Zylinder eines geschleppten oder halbintegrierten Anbaugerätes wird durch ein übliches magnetgesteuertes, elektrohydraulisches Durchflußsteuerventil 42 gesteuert, dessen elektrische Steuersignale von einer Steuervorrichtung oder einer zentralen Steuereinheit 50 erzeugt werden, wobei letztere einen digitalen Mikroprozessor, einen Analog/Digital-Umwandler, Multiplexer und/ oder andere übliche Hardwareteile enthalten kann. Das Durchflußsteuerventil 42 kann auch ein handelsübliches Servo-Ventil vom MOOG-Typ mit einer von einem Drehmomentmotor gesteuerten Steuerstufe und einer integrierten Sekundärstufe enthalten. Die Strömungsgeschwindigkeit des hydraulischen Mediums ist im wesentlichen proportional zu der Größe des elektrischen Stroms, welcher den Drehmomentmotor des Ventils 42 antreibt.

Ein einstellbarer Lage/Zugkraft-Bedienungshebel 52 ist mit einem Hebelstellungsmeßumwandler 54 (beispielsweise einem Potentiometer) verbunden, welcher eine Führungsgröße erzeugt, die ihrerseits, entsprechend der Einstellung eines Lage/Zugkraft-Steuermodusschalters 56, einer gewünschten Position der Anhängevorrichtung 26 oder einer gewünschten Zugkraft entspricht. Ein elektrisches oberes Grenzwertsignal erhält man durch ein manuell einstellbares Potentiometer 51. Der Hebel 52 bewegt sich innerhalb eines Schlitzes 57. Die Endpunkte 53 und 55 dieses Schlitzes 57 wirken als mechanische obere bzw. untere Anschläge, die die Lage des Bedienungshebels 52 mechanisch begrenzen, wodurch auch die Signale des Potentiometers 54 begrenzt werden.

Eine Lagemeßeinrichtung 60, beispielsweise ein übliches Drehpotentiometer, erzeugt ein Positionssignal, das der tatsächlich gemessenen Position der Hubwelle 24 entspricht. Ein Positionsrückkopplungssignal könnte man auch über den Hubwellen-Zylinder 34 oder einen entfernt liegenden Hubzylinder erhalten, wenn diese Zylinder einen Positionsmeßumformer enthalten, wie es z.B. in der US-PS-3,726,191 beschrieben ist.

Die oben beschriebenen Hardware-Elemente sowie die unten beschriebenen Algorithmusmerkmale können mit anderen Steuerelementen für die Anhängevorrichtungssteuerung, wie sie in der US-PS-4,518,044 beschrieben wurden, kombiniert werden.

Ferner kann ein Anhebe- und ein Absenkschalter 70, 72 ausserhalb der Traktorkabine in der Nähe der Anhängevorrichtung 26 angeordnet werden, die es einer Betriebsperson ermöglichen, die Anhängevorrichtung 26 auch von einem Ort aus, der außerhalb der Traktorkabine liegt, anzuheben und abzusenken.

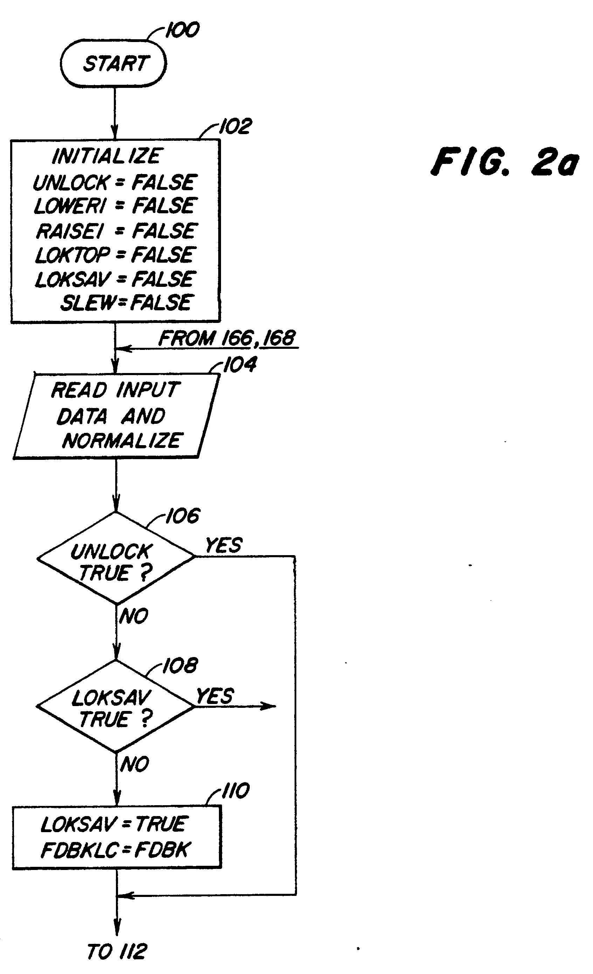

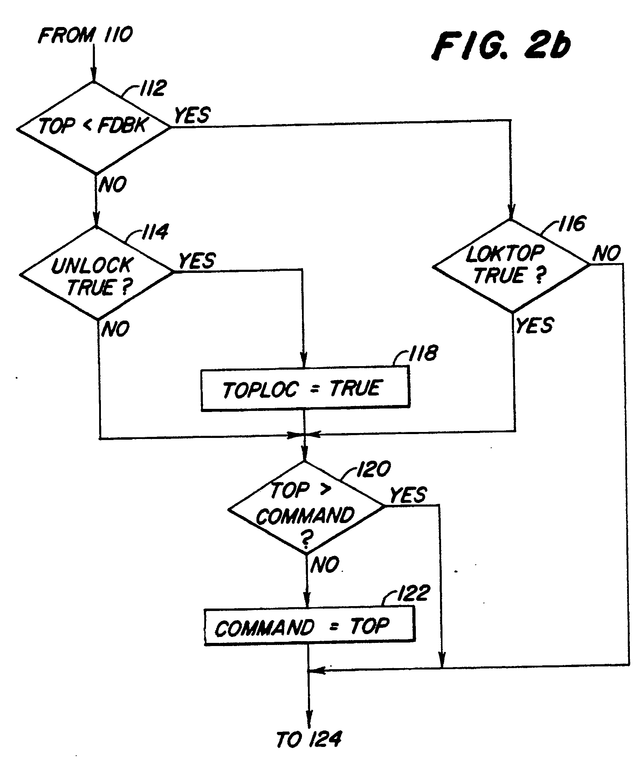

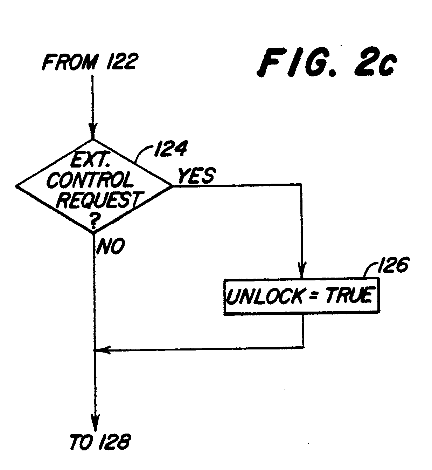

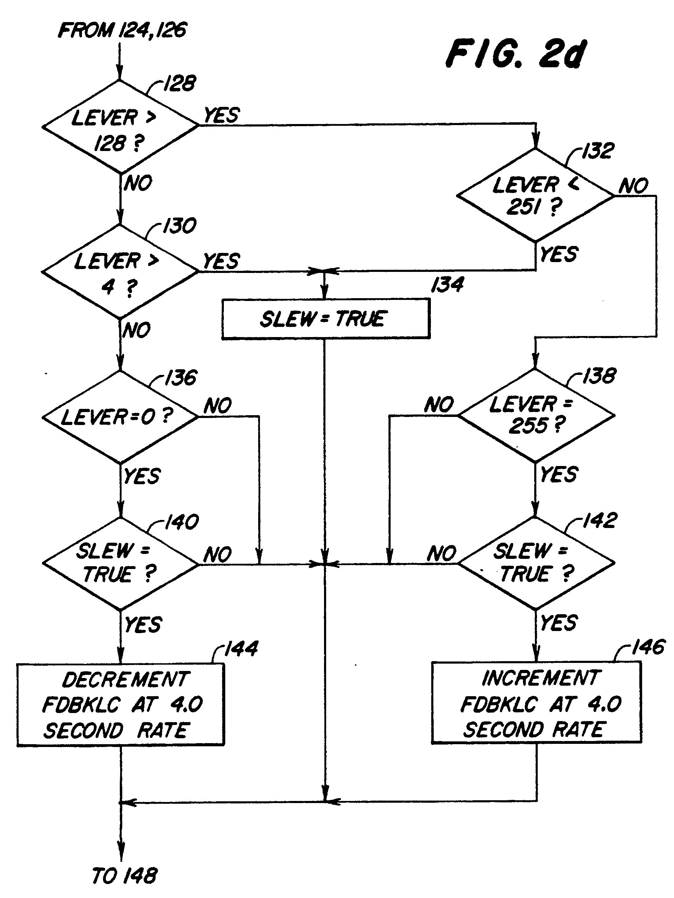

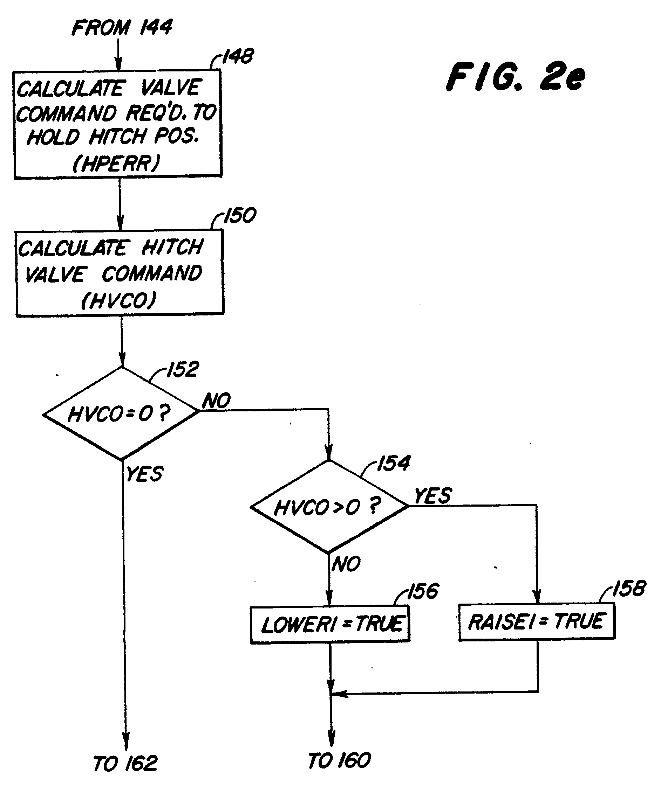

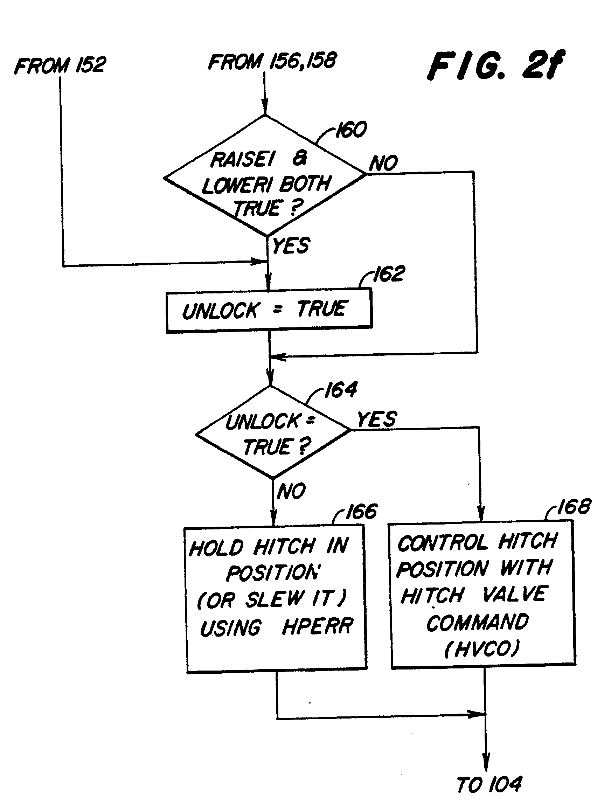

Der Steueralgorithmus, der dem erfindungsgemäßen Verfahren bzw. dem erfindungsgemäßen Steuersystem zugrundeliegt, ist in den Figuren 2a bis 2f dargestellt. Der Algorithmus beginnt bei Schritt 100, nach welchem, bei Schritt 102, verschiedene Variablen wie folgt eingeführt und auf "unwahr" gesetzt werden:

| | |
|---|---|
| UNLOCK | bedeutet, daß die Anhängevorrichtung 26 entriegelt ist, |
| LOWER 1 | bedeutet, daß der Steuerbefehl für die Anhängevorrichtung 26 seit dem Einschalten der Steuereinheit 50 abgesenkt wurde, |
| RAISE 1 | bedeutet, daß der Steuerbefehl für die Anhängevorrichtung 26 seit dem Einschalten der Steuereinheit 50 angehoben wurde, |
| LOKTOP | bedeutet, daß der obere Grenzwert der Anhängevorrichtung 26 entriegelt ist, |
| LOKSAV | bedeutet, daß die Stellung der Anhängevorrichtung 26, die diese beim Einschalten der Steuereinheit 50 innehatte, beibehalten wurde, |
| SLEW | bedeutet, daß ein Verschwenken der Position der Anhängevorrichtung 26 zugelassen wird. |

Bei Schritt 104 werden die Eingangsgrößen der Anhängevorrichtungsteuerung eingelesen und so normiert, daß alle Eingaben zwischen 0 und 255 Einheiten liegen. Die wesentlichen Eingangsgrößen für den Anfahrverriegelungsalgorithmus sind folgende:

| | |
|---|---|
| FDBK | Rückführungssignal der Position der Anhängevorrichtung 26, |

LEVER     Stellung des Bedienungshebels 52,

COMMAND     Steuerbefehl der Lagesteuerung, der durch die Lage des Bedienungshebels 52 bestimmt ist,

TOP     Steuersignal für den oberen Grenzwert der Anhängevorrichtung 26 entsprechend dem Grenzwert setzer 51.

In den Schritten 106 bis 110 wird festgestellt, ob die Position (FDBK) der Anhängevorrichtung 26 beim Anfahren der Steuereinheit 50 beibehalten werden muß. Wenn nötig, wird sie in FDBKLC beibehalten. Dies wird erreicht, indem geprüft wird, ob die Anhängevorrichtung 26 entriegelt ist und ob die Lage der Anhängevorrichtung 26 beibehalten wurde. Abfrage 106 prüft den Zustand des UNLOCK-Flagbits, um festzustellen, ob die Anhängevorrichtung 26 entriegelt ist, und Schritt 108 prüft den Zustand des LOCKSAV-Flagbits, um festzustellen, ob die Position der Anhängevorrichtung beibehalten wurde. Sollte beides nicht zutreffen, erhält Schritt 110 die Lage der Anhängevorrichtung (FDBK) beim Einschalten der Steuereinheit 50 im Speicher FDBKLC bei.

Die Schritte 112 bis 122 überprüfen den oberen Grenzwert der Anhängevorrichtung 26 (TOP), um festzustellen, ob er als Steuerungsgrenzwert verwendet werden soll (entriegelt) Hierzu wird festgestellt, ob die Anhängevorrichtung 26 eine Position unterhalb des oberen Grenzwertes einnimmt. Falls dies zutrifft, wird der obere Grenzwert entriegelt. Schritt 112 überprüft, ob der obere Grenzwert, der durch das Potentiometer 51 eingestellt wurde (TOP), niedriger ist als die Position der Anhängevorrichtung (FDBK) und verzweigt die Abfrage zu Schritt 116, falls dies zutrifft, oder zu 114, falls nicht. Liegt der obere Grenzwert oberhalb der Position der Anhängevorrichtung 26, so wird der Steuerbefehl (COMMAND) für die Anhängevorrichtung 26 mit Schritt 120 und 122 auf den oberen Grenzwert (TOP) begrenzt. Sollte der Hebel jedoch entriegelt sein (UNLOCK = wahr, Schritt 114), dann wird der obere Grenzwert ebenfalls entriegelt (TOPLOC = wahr, Schritt 118), ehe der Steuerbefehl in Schritt 120 und 122 begrenzt wird. Sollte die Anhängevorrichtung 26 über dem oberen Grenzwert liegen, so wird der Steuerbefehl nur dann begrenzt (Schritt 120 und 122), wenn der obere Grenzwert entriegelt ist (LOKTOP = wahr, Schritt 116).

Die Schritte 124 und 126 entriegeln die Anhängevorrichtung 26 jedesmal dann, wenn die externen Schalter 70, 72 bedient werden.

Die Schritte 128 bis 144 und 146 bewegen die Anhängevorrichtung 26 auf die Position, die von dem Hebel 52 bestimmt ist, sobald der Hebel 52 auf eine der beiden Endlagen 53, 55 verstellt wird. Dies wird erreicht, indem geprüft wird, ob der Hebel jemals von der Endlage 53, 55 entfernt war (SLEW = wahr). Daraufhin wird die Anfahrposition der Anhängevorrichtung (FDBKLC) vergrößert (bzw. verkleinert), falls der Hebel auf einer Endlage steht.

Schritt 128 stellt fest, welche der beiden Endlagen 53, 55 näher zu dem Hebel 52 liegt. Sollte der Hebel 52 näher an der oberen Endlage 55 liegen (LEVER > 128), verzweigt sich das Programm zu Schritt 132. Falls nicht, verzweigt es sich zu Schritt 130. Bei den Schritten 130 und 132 stellt das Programm fest, ob der Hebel 52 mindestens 1,5 % von den Endlagen entfernt ist (LEVER > 4 am unteren Ende, oder LEVER < 251 am oberen Ende). Falls der Hebel sich nicht in der Nähe einer Endlage befindet, wird dies mit Schritt 134 (SLEW = wahr) gespeichert und das Programm fährt mit Schritt 148 fort. Falls sich der Hebel 52 in der Nähe einer Endlage 53, 55 befindet, wird in den Schritten 136 und 138 geprüft, ob er genau auf einer Endlage 53, 55 steht. Steht der Hebel nicht genau auf einer der beiden Endlagen 53, 55, fährt das Programm mit Schritt 148 fort. Falls der Hebel 52 jedoch auf einer der beiden Endlagen 53, 55 steht, wird durch die Schritte 140 oder 142 geprüft, ob der Hebel 52 vorher von der Endlage 53, 55 entfernt war (SLEW = wahr). Falls dies zutrifft, wird die Anfahrposition (FDBKLC) schrittweise erhöht (Schritt 146) oder erniedrigt (Schritt 144). Danach fährt der Algorithmus mit Schritt 148 fort. Dies verursacht eine stufenweise Bewegung der Anhängevorrichtung 26 auf eine Stellung, die der entsprechenden Endlage 53 oder 55 des Hebels 52 entspricht. Falls SLEW nicht wahr ist, fährt das Programm fort, ohne die Anfahrposition der Anhängevorrichtung 26 zu verändern. Bei Schritt 148 wird das Ventilsteuerungssignal, das benötigt wird, um den Zug in der Anfahrposition zu halten, entsprechend folgender Gleichung berechnet:

$$HPERR = [(FDBKLC - FDBK) \times 256 \times G18] / 128 + G19$$

wobei G18 eine Konstante ist, die den Verstärkungsgrad des Ventils (der Wert kann zwischen 26 und 55 liegen) darstellt, und G19 eine Konstante ist, die den Ansprechschwellenwert des Ventils (typischer Wert ca. 1250) darstellt. Dies ist im Prinzip die selbe Gleichung, wie sie auch in dem üblichen Lagesteuerungsverfahren für Anhängevorrichtungen verwendet wird, mit dem Unterschied, daß FDBKLC anstelle des Steuersignals eines Bedienungshebels eingeführt wurde. Im Schritt 150 wird der Sollwertbefehl (HVCO) für das Steuerventil der Anhängevorrichtung 26 berechnet. Dieser Schritt stellt einen Steueralgorithmus für die Anhängevorrichtung 26 dar, wie er in der US-PS-4,518,044 beschrieben wurde.

Die Schritte 152 bis 162 stellen fest, ob die Anhängevorrichtung 26 entriegelt werden kann. Die Anhängevorrichtung 26 wird entriegelt, falls der Sollwertbefehl für das Ventil der Anhängevorrichtung (HVCO) von Schritt 150 gleich 0 ist oder seit dem Anfahren die Nullstellung passiert hat. Schritt 152 untersucht, ob der Ventilsteuerbefehl 0 ist (HVCO = 0) und entriegelt die Anhängevorrichtung (UNLOCK = wahr, Schritt 162), falls dies zutrifft. Schritt 154 prüft die Richtung des Steuerbefehls für die Anhängevorrichtung (HVCO > 0?) und zeigt an, daß ein Befehl zum Anheben der Anhängevorrichtung 26 abgegeben wurde (RAISE1 = wahr, Schritt 158), falls eine Betätigung des Druckventils erforderlich ist, oder, daß ein Befehl zum Absenken der Anhängevorrichtung 26 abgegeben wurde (LOWER1 = wahr, Schritt 156), falls eine Betätigung des Rückholventils erforderlich ist. Schritt 160 prüft dann, ob sowohl Senk- als auch Hebebefehle seit dem Einschalten abgegeben wurden und entriegelt die Anhängevorrichtung 26, falls dies zutrifft, (UNLOCK = wahr, Schritt 162).

Schritt 164 bestimmt den Ventilbefehl zur Steuerung der Anhängevorrichtung 26. Falls die Anhängevorrichtung entriegelt ist (UNLOCK = wahr), fährt das Programm weiter zu Schritt 168 und gibt den Sollwert (HVCO) für das Ventil zur Steuerung der Anhängevorrichtung von Schritt 150 an das entsprechende Ventil weiter. Falls die Anhängevorrichtung 26 nicht entriegelt ist, fährt das Programm zu Schritt 166 und gibt den notwendigen Ventilsteuerungsbefehl an das Ventil ab, um die Anhängevorrichtung 26 in ihrer Einschaltposition (HPERR) gemäß Schritt 148 zu halten.

Von hier aus fährt das Programm zurück zu Schritt 104, um neue Daten aufzunehmen. Die Schleife von Schritt 104 zu Schritt 166 oder 168 wird solange fortgesetzt, bis das Steuersystem für die Anhängevorrichtung 26 in Betrieb gesetzt ist.

Die Umwandlung des oben beschriebenen Flußdiagramms in eine Programmsprache, damit der Algorithmus, wie er in dem Flußdiagramm beschrieben ist, in einer digitalen Datenverarbeitungsanlage, wie z.B. ein Mikroprozessor, angewandt werden kann, stellt für Fachleute auf diesem Gebiet kein Problem dar.

Obwohl die Erfindung in Zusammenhang mit einer speziellen Ausführungsform beschrieben wurde, ist es ersichtlich, daß im Lichte der vorangegangenen Beschreibung viele Alternativen, Änderungen und Variationen für Fachleute naheliegen.

**Patentansprüche**

1. Verfahren zur Steuerung der Position der Anhängevorrichtung (26) eines Fahrzeuges (10), an die ein bodenbearbeitendes Anbaugerät befestigbar ist, bei dem durch ein Steuersystem folgende Signale erfaßt werden:

   - eine Führungsgröße, welche einer gewünschten Steuercharakteristik der Anhängevorrichtung (26) entspricht und durch eine Bedienungseinrichtung (52) einstellbar ist,
   - ein Lagemeßwert, der die tatsächliche Position der Anhängevorrichtung (26) wiedergibt und durch einen Lagesensor (60) erfaßt wird und
   - ein Grenzwertsignal, welches einer gewünschten Grenzwertposition der Anhängevorrichtung (26) entspricht und durch einen manuell einstellbaren Grenzwertsetzers (51) erzeugt wird,

   und bei dem das Steuersystem in Abhängigkeit der Führungsgröße und des Lagemeßwertes automatisch Steuersignale erzeugt, entsprechend derer die Anhängevorrichtung (26) innerhalb eines Lagebereiches angehoben bzw. abgesenkt wird, dadurch gekennzeichnet, daß für den Fall, daß beim Anfahren des Steuersystems die tatsächliche Lage der Anhängevorrichtung (26) außerhalb der Grenzwertposition liegt, das Steuersystem Bewegungen der Anhängevorrichtung (26) so lange unterbindet, bis infolge einer manuellen Verstellung der Bedienungseinrichtung (52) die entsprechende Lage der Anhängevorrichtung (26) die Grenzwertposition erreicht hat und/oder bis infolge einer manuellen Verstellung des Grenzwertsetzers (51) das Grenzwertsignal der tatsächlichen Lage der Anhängevorrichtung (26) entspricht.

2. Verfahren zur Steuerung der Position der Anhängevorrichtung (26) eines Fahrzeuges (10), an die ein bodenbearbeitendes Anbaugerät befestigbar ist, bei dem durch ein Steuersystem folgende Signal erfaßt werden:

   - ein Lagesignal, welches einer gewünschten Lage der Anhängevorrichtung (26) entspricht und durch eine Bedienungseinrichtung (52) einstellbar ist, wobei die Bedienungseinrichtung (52) Begrenzungen enthält, die eine mechanische Bewegung über die Grenzposition hinaus verhindern und
   - ein Lagemeßwert, der die tatsächliche Position der Anhängevorrichtung (26) wiedergibt und durch einen Lagesensor (60) erfaßt wird,

und bei dem das Steuersystem Steuersignale in Abhängigkeit des Lagesignals und des Lagemeßwertes abgibt, entsprechend derer die Anhängevorrichtung (26) angehoben bzw. abgesenkt wird, dadurch gekennzeichnet, daß beim Anfahren des Steuersystems dieses die Position der Bedienungseinrichtung (52) mit deren Grenzposition vergleicht und eine Bewegung der Anhängevorrichtung (26) so lange unterbindet, wie die Position der Bedienungseinrichtung (52) von der Grenzposition abweicht.

3. Verfahren nach Anspruch 2, dadurch gekennzeichnet, daß dann, wenn die Bedienungseinrichtung (52) von einer mittleren Stellung aus auf die Grenzposition bewegt wurde, das Steuersignal die Anhängevorrichtung (26) derart beeinflußt, daß dieses zu einer Position bewegt wird, die der Grenzposition der Bedienungseinrichtung (52) entspricht.

4. Steuersystem zur Ausführung des Verfahrens nach einem der Ansprüche 1 bis 3, zur Lageeinstellung der Anhängevorrichtung (26) eines Fahrzeuges (10), an der ein bodenbearbeitendes Anbaugerät befestigbar ist, welches Antriebsmittel zum Anheben und Absenken der Anhängevorrichtung (26) innerhalb eines Lagerbereiches entsprechend vorgebbarer Steuersignale enthält,

- mit einer Bedienungseinrichtung (52) zur Erzeugung einer Führungsgröße, welche einer gewünschten Steuercharakteristik der Anhängevorrichtung (26) entspricht,
- mit einem Lagesensor (60) zur Erfassung der tatsächlichen Lage der Anhängevorrichtung (26),
- mit einem manuell einstellbaren Grenzwertsetzer (51) zur Erzeugung eines Grenzwertsignals, welches einer gewünschten Grenzwertposition der Anhängevorrichtung (26) entspricht
- und mit einer Steuereinheit (50), welche automatisch die besagten Steuersignale in Abhängigkeit der Führungsgröße und des Lagemeßwertes erzeugt, und eine Anfahrverriegelungseinrichtung enthält,

dadurch gekennzeichnet, daß die Anfahrverriegelungseinrichtung eine Vergleichseinrichtung zur Feststellung, ob die tatsächliche Lage der Anhängevorrichtung (26) außerhalb der Grenzwertposition liegt, aufweist, und einen Diskriminator enthält, welcher so lange die Abgabe eines Steuersignals, durch das die aktuelle Lage der Anhängevorrichtung (26) aufrechterhalten und eine Bewegung der Anhängevorrichtung (26) verhindert wird, veranlaßt, bis die Führungsgröße infolge einer manuellen Verstellung der Bedienungseinrichtung (52) eine der Grenzwertposition entsprechende Größe erreicht und/oder bis das Grenzwertsignal infolge einer manuellen Verstellung des Grenzwertsetzers (51) eine der Lage der Anhängevorrichtung (26) entsprechende Größe erreicht.

5. Steuersystem zur Ausführung des Verfahrens nach einem der Ansprüche 1 bis 3, zur Lageeinstellung der Anhängevorrichtung (26) eines Fahrzeuges (10), an der ein bodenbearbeitendes Anbaugerät befestigbar ist, welches Antriebsmittel zum Anheben und Absenken der Anhängevorrichtung (26) und des Anbaugerätes entsprechend vorgebbarer Steuersignale enthält,

- mit einer Bedienungseinrichtung (52) zur Erzeugung eines Lagesignals, welches einer gewünschten Lage der Anhängevorrichtung entspricht, wobei die Bedienungseinrichtung (52) Begrenzungen enthält, die eine mechanische Bewegung über die Grenzposition hinaus verhindern,
- mit einem Lagesensor (60) zur Erfassung der Lage der Anhängevorrichtung
- und mit einer Steuereinheit (50), welche die besagten Steuersignale in Abhängigkeit des Lagesignals und der gemessenen Lage der Anhängevorrichtung erzeugt, und eine Anfahrverriegelungseinrichtung enthält,

dadurch gekennzeichnet, daß die Anfahrverriegelungseinrichtung eine Vergleichseinrichtung zur Feststellung der relativen Lage der Bedienungseinrichtung (52) zu deren Grenzposition aufweist und einen Diskriminator enthält, welcher so lange ein Steuersignal abgibt, durch das die aktuelle Lage der Anhängevorrichtung (26) aufrechterhalten und eine Bewegung der Anhängevorrichtung (26) verhindert wird, wie die Lage der Bedienungseinrichtung (26) von der Grenzposition abweicht.

6. Steuersystem nach Anspruch 5, dadurch gekennzeichnet, daß die Anfahrverriegelungseinrichtung eine Abfrageeinrichtung enthält, welche prüft, ob die Bedienungseinrichtung (52) von einer mittleren Lage aus auf die Grenzposition bewegt wurde, und falls dies zutrifft, die Abgabe von Steuersignalen veranlaßt, die die Anhängevorrichtung (26) auf eine Position entsprechend der Grenzposition bewegen.

**Claims**

1. Method for controlling the position of the hitch appliance (26) of a vehicle (10), to which a ground-working implement can be attached, in which the following signals are derived by a control system:
   - a command value, which corresponds to a desired control characteristic of the hitch appliance (26) and can be adjusted by a control device (52),
   - a measured position value which reproduces the actual position of the hitch appliance (26) and is derived by a position sensor (60) and
   - a limit value signal which corresponds to a desired limit position of the hitch appliance (26) and is generated by a manually adjustable limit value setter (51),

   and in which the control system automatically generates control signals in dependence on the command value and the measured position value, in accordance with which the hitch appliance (26) is raised and lowered within a positional range, characterized in that, in the case when the actual position of the hitch appliance (26) lies outside the limit position on starting up of the control system, the control system prevents movements of the hitch appliance (26) until, as a result of manual adjustment of the control device (52) the corresponding position of the hitch appliance (26) has reached the limit position and/or until, as a result of a manual adjustment of the limit value setter (51) the limit value signal corresponds to the actual position of the hitch appliance (26).

2. Method for controlling the position of the hitch appliance (26) of a vehicle (10), to which a ground-working implement can be attached, in which the following signals are derived by a control system:
   - a position signal, which corresponds to a desired position of the hitch appliance (26) and can be adjusted by an operating device (52), wherein the control device (52) has limits which prevent mechanical movement beyond the limit position, and
   - a measured position value which reproduces the actual position of the hitch appliance (26) and is derived by a position sensor (60)

   and in which the control system automatically generates control signals in dependence on the position signal and the measured position value, in accordance with which the hitch appliance (26) is raised and lowered, characterized in that, on starting up the control system, this compares the position of the control device (52) with its limit position and prevents movement of the hitch appliance (26) so long as the position of the control device (52) deviates from the limit position.

3. Method according to claim 2, characterized in that, when the control device (52) has been moved from a central position to the limit position, the control signal so affects the hitch appliance (26) that this is moved to a position which corresponds to the limit position of the control device (52).

4. Control system for carrying out the method according to one of claims 1 to 3, for position adjustment of the hitch appliance (26) of a vehicle (10) to which a ground-working implement can be attached, which includes drive means for raising and lowering the hitch appliance (26) within a positional range corresponding to pre-settable control signals,
   - with a control device (52) for generating a command value, which corresponds to a desired control characteristic of the hitch appliance (26),
   - with a position sensor (60) for determining the actual position of the hitch appliance (26),
   - with a manually adjustable limit value setter (51) for generating a limit value signal, which corresponds to a desired limit position of the hitch appliance (26),
   - and with a control unit (50) which automatically generates the said control signals in dependence on the command value and the measured position value, and includes a start-up interlock device,

   characterized in that the start-up interlock device comprises a comparator device for determining whether the actual position of the hitch appliance (26) lies outside the limit position, and includes a discriminator which causes the provision of a control signal by means of which the actual position of the hitch appliance (26) is maintained and movement of the hitch appliance (26) is prevented, until the command value reaches a value corresponding to the limit position as a result of a manual adjustment of the control device (52) and/or until the limit value signal reaches a value corresponding to the position of the hitch appliance (26) as a result of a manual adjustment of the limit value setter (51).

5. Control system for carrying out the method according to one of claims 1 to 3, for position adjustment of the hitch appliance (26) of a vehicle (10) to which a ground-working implement can be attached, which includes drive means for raising and lowering the hitch appliance (26) and the implement corresponding to pre-settable signals,

- with a control device (52) for generating a position signal which corresponds to a desired position of the hitch appliance, wherein the control device (52) has limits which prevent mechanical movement beyond the limit position,
- with a position sensor (60) for determining the actual position of the hitch appliance,
- and with a control unit (50) which automatically generates the said control signals in dependence on the position signal and the measured position of the hitch appliance and includes a start-up interlock device,

characterized in that the start-up interlock device comprises a comparator device for determining the position of the control device (52) relative to its limit position and includes a discriminator which provides a control signal, through which the actual position of the hitch appliance (26) is maintained and movement of the hitch appliance (26) is prevented so long as the position of the control device (52) deviates from the limit position.

6. Control system according to claim 5, characterized in that the startup interlock device includes a monitoring device which tests whether the control device (52) has been moved from a central position to the limit position and, when this occurs, causes the provision of control signals which move the hitch appliance (26) to a position corresponding to the limit position.

**Revendications**

1. Procédé pour régler la position de l'attelage (26) d'un véhicule (10), auquel peut être fixé un outil porté ou semi-porté pour le travail du sol, procédé selon lequel un système de réglage détecte les signaux suivants:

   - une grandeur de référence correspondant à une caracristique de réglage désirée de l'attelage (26) et pouvant être ajustée au moyen d'un dispositif de commande (52),
   - une valeur de mesure de position qui reproduit la position effective de l'attelage (26) et est détectée par un capteur de position (60) et

- un signal de valeur limite correspondant à une position limite désirée de l'attelage (26) et est généré par un organe de réglage de valeur limite ajustable manuellement,

et dans lequel le système de réglage génère automatiquement, en fonction de la grandeur de référence et de la valeur de mesure de position, des signaux de pilotage, en conformité avec lesquels l'attelage (26) est relevé ou abaissé à l'intérieur d'une plage de positions, caractérisé en ce que, au cas où la position effective de l'attelage (26) au démarrage du système de réglage est en dehors de la position limite, le système de réglage empêche les mouvements de l'attelage (26) jusqu'à ce que, par suite d'une manoeuvre manuelle du dispositif de commande (52), la position de l'attelage (26) correspondant à cette manoeuvre ait atteint la position limite, et/ou jusqu'à ce que, par suite d'une manoeuvre manuelle de l'organe de réglage de la valeur limite (51), le signal de valeur limite corresponde à la position effective de l'attelage (26).

2. Procédé pour régler la position de l'attelage (26) d'un véhicule (10), auquel peut être fixé un outil porté ou semi-porté pour le travail du sol, procédé selon lequel un système de réglage détecte les signaux suivants:

   - un signal de position correspondant à une position désirée de l'attelage (26) et ajustable au moyen d'un dispositif de commande (52), dispositif qui comporte des limitations empêchant le mouvement mécanique au-delà de la position limite et
   - une valeur de mesure de position qui reproduit la position effective de l'attelage (26) et est détectée par un capteur de position (60),

et dans lequel le système de réglage délivre, en fonction du signal de position et de la valeur de mesure de position, des signaux de pilotage en conformité avec lesquels l'attelage (26) est relevé ou abaissé, caractérisé en ce que, au démarrage du système de réglage, celui-ci compare la position du dispositif de commande (52) avec la position limite de ce dispositif et empêche un mouvement de l'attelage (26) aussi longtemps que la position du dispositif de commande (52) diffère de la position limite.

3. Procédé selon la revendication 2, caractérisé en ce que, lorsque le dispositif de commande (52) a été déplacé depuis une position moyenne vers la position limite, le signal de pilotage agit sur l'attelage (26) de manière que celui-ci soit amené à une position correspondant à la position limite du dispositif de commande (52).

4. Système de réglage pour la mise en oeuvre du procédé selon une des revendications 1 à 3, servant au réglage de la position de l'attelage (26) d'un véhicule (10), auquel peut être fixé un outil porté ou semi-porté Pour le travail du sol, système qui comporte des moyens d'entraînement pour relever et abaisser l'attelage (26) à l'intérieur d'une plage de positions en conformité avec des signaux de pilotage pouvant être préfixes en conséquence, de même que

   - un dispositif de commande (52) pour générer une grandeur de référence correspondant à une caractéristique de réglage désirée de l'attelage (26),
   - un capteur de position (60) pour détecter la position effective de l'attelage (26),
   - un organe de réglage de la valeur limite (51), ajustable manuellement, pour générer un signal de valeur limite correspondant à une position limite désirée de lattelage (26) et
   - une unité de commande (50) qui produit automatiquement lesdits signaux de pilotage en fonction de la grandeur de référence et de la valeur de mesure de position et qui contient un dispositif de verrouillage du démarrage,

   caractérisé en ce que le dispositif de verrouillage du démarrage comporte un comparateur pour déterminer si la position effective de l'attelage (26) est en dehors de la position limite, ainsi qu'un discriminateur qui assure la délivrance d'un signal de pilotage maintenant la position actuelle de l'attelage (26) et empêchant le mouvement de celui-ci, jusqu'à la grandeur de référence, par suite d'uns manoeuvre manuelle du dispositif de commande (52), ait atteint une grandeur correspondant à l'une des positions limites et/ou jusqu'à ce que le signal de valeur limite, par suite d'une manoeuvre manuelle de l'organe de réglage de la valeur limite (51), ait atteint une grandeur correspondant à la position de l'attelage (26).

5. Système de réglage pour la mise en oeuvre du procédé selon une des revendications 1 à 3 servant au réglage de la position de l'attelage (26) d'un véhicule (10), auquel peut être fixé un outil porté ou semi-porté pour le travail du sol, système qui comporte des moyens d'entraînement pour relever et abaisser l'attelage (26) et l'outil en conformité avec des signaux de pilotage pouvant être préfixés en conséquence, de même que

   - un dispositif de commande (52) pour générer un signal de position correspondant à une position désirée de l'attelage, le dispositif de commande (52) comportant des limitations qui empêchent un mouvement mécanique au-delà de la position limite,
   - un capteur de position (60) pour détecter la position de l'attelage et
   - une unité de commande (50) qui génère lesdits signaux de pilotage en fonction du signal de position et de la position mesurée de l'attelage et qui contient un dispositif de verrouillage du démarrage,

   caractérisé en ce que le dispositif de verrouillage du démarrage comprend un comparateur pour déterminer la position relative du dispositif de commande (52) par rapport à sa position limite, ainsi qu'un discriminateur qui délivre un signal de pilotage maintenant la position actuelle de l'attelage (26) et empêchant le mouvement de celui-ci tant que la position du dispositif de commande (52) diffère de la position limite.

6. Système de réglage selon la revendication 5, caractérisé en ce que le dispositif de verrouillage du démarrage comporte un dispositif d'interrogation qui vérifie si le dispositif de commande (52) a été déplacé depuis une position moyenne en direction de la position limite et qui produit seulement si cela est le cas, la délivrance de signaux de pilotage qui amènent l'attelage (26) à une position correspondant à la position limite.

FIG. 1

FIG. 3

*100*

START

*102*

INITIALIZE
UNLOCK = FALSE
LOWERI = FALSE
RAISEI = FALSE
LOKTOP = FALSE
LOKSAV = FALSE
SLEW = FALSE

FROM 166, 168

*104*

READ INPUT
DATA AND
NORMALIZE

*106*

UNLOCK
TRUE ?  — YES

NO

*108*

LOKSAV
TRUE ?  — YES

NO

*110*

LOKSAV = TRUE
FDBKLC = FDBK

TO 112

# FIG. 2a

12

# FIG. 2b

FROM 110

TOP < FDBK — 112

- YES
- NO

UNLOCK TRUE? — 114

- YES
- NO

LOKTOP TRUE? — 116

- NO
- YES

TOPLOC = TRUE — 118

TOP > COMMAND ? — 120

- YES
- NO

COMMAND = TOP — 122

TO 124

FIG. 2c

FROM 122

124

EXT. CONTROL REQUEST ?

YES

NO

126

UNLOCK = TRUE

TO 128

**FROM 124,126**

**FIG. 2d**

128
LEVER > 128 ? — YES

NO

130
LEVER > 4 ? — YES

NO

132
LEVER < 251 ? — NO

YES

134
SLEW = TRUE

136
LEVER = 0 ? — NO

YES

138
NO — LEVER = 255 ?

YES

140
SLEW = TRUE ? — NO

YES

142
NO — SLEW = TRUE ?

YES

144
DECREMENT FDBKLC AT 4.0 SECOND RATE

146
INCREMENT FDBKLC AT 4.0 SECOND RATE

**TO 148**

*FIG. 2e*

FROM 144

CALCULATE VALVE
COMMAND REQ'D. TO
HOLD HITCH POS.
(HPERR) /148

CALCULATE HITCH
VALVE COMMAND
(HVCO) /150

HVCO = O ? /152

NO

YES

HVCO > O ? /154

YES

NO

LOWERI = TRUE /156

RAISEI = TRUE /158

TO 162

TO 160

16

# FIG. 2f

FROM 152

FROM 156,158

**160**

RAISEI & LOWERI BOTH TRUE ?

NO

YES

**162**

UNLOCK = TRUE

**164**

UNLOCK = TRUE ?

YES

NO

**166**

HOLD HITCH IN POSITION (OR SLEW IT) USING HPERR

**168**

CONTROL HITCH POSITION WITH HITCH VALVE COMMAND (HVCO)

TO 104